# EUROPEAN PATENT SPECIFICATION

(11) **EP 0 834 758 B1**
(45) Date of publication and mention of the grant of the patent: **01.09.1999**
(21) Application number: 97120924.2
(22) Date of filing: 30.06.1995
(51) Int. Cl.: G02B 21/24, G02B 21/26, G02B 7/36

(54) **Continuous volume imaging system for scanning microscopy**
System zur kontinnierlichen räumlichen Abbildung für Abtastmikroskopie
Système d'image en volume continu pour microscopie à balayage

(30) Priority: 01.07.1994 US 270017
(43) Date of publication of application: 08.04.1998
(62) Divisional of application: 95925491.3
(73) Proprietor: Price, Jeffrey H., La Jolla, CA 92037 (US)
(72) Inventor: Price, Jeffrey H., La Jolla, CA 92037 (US)
(74) Representative: Hanna, Peter William Derek

(56) References cited:
- EP-A- 0 163 394
- DE-A- 2 615 841
- DE-A- 3 828 381
- DE-A- 4 226 523
- US-A- 4 342 905
- US-A- 4 829 374
- US-A- 5 239 170

## Description

### TECHNICAL FIELD

The present invention relates to autofocusing and more particularly, to a system for microscope autofocusing.

### BACKGROUND ART

Autofocus is a requirement for any fully automated microscope-based image processing system that must scan areas larger than a single field. Experience has shown that it is not possible to maintain focus simply by determining the best foci at two points on a microscope slide and scanning along the line between them in three dimensional space This may be due to many causes, including mechanical instability of the microscope and irregularity of glass slide surfaces. For example, thermal expansion could account for several microns of instability in microscopes with lamps acting as unevenly distributed heat sources. Using the coefficient of thermal expansion for aluminium, a 1.0°C increase causes 0.6 micrometer (µm) of expansion for each 23 millimetres (mm) length between the objective and stage in a microscope. Mechanical instability may also arise from gear slippage and settling between moving components in the stage. Microscope slide surface irregularities is another source of error. Standard optical quality mirror flatness is about 1.5 µm over 25 mm. Given that mirrors are ground glass and microscope slides are float glass, microscope slide surface irregularity could be much greater. According to the definition by others, such as Françon (Françon M: Progress in Microscopy Row, Peterson, Evanston. III, 1961). the theoretical microscope depth of field for an objective with numerical aperture (NA) 0.75 is 0.74 µm at a wavelength of 500 nm. Best focus can vary through a range of about 25 µm in a horizontal scan of 50 mm across a microscope slide. Whatever the source of instability, autofocus can compensate given that the positional variations have relatively long time constants.

Most autofocus methods fall into two categories: position sensing and image content analysis. Position sensing methods, such as interferometry, require independent calibration of the best focus location and, more importantly, a single well-defined surface from which to reflect light or sound. In light microscopy there are often two reflective surfaces, the coverslip and slide. In addition, tissue specimens can have significant depth and best focus is not necessarily achieved at the surface of the glass. These problems make absolute position sensing methods impractical for use in light microscopy. Image content analysis functions, such as used by the present invention for autofocusing the microscope, on the other hand, depend only on characteristics measured directly from the image. Best focus is found by comparison of these characteristics in a series of images acquired at different vertical positions. This method of autofocus requires no independent reference and is not affected significantly by the second reflective surface. Its most important limitation is speed, which is dependent on the video rate, the vertical repositioning time, function calculation time and search range.

Image content autofocus functions have previously been compared for brightfield microscopy, but apparently not for fluorescence or phase-contrast microscopy. For example. Groen, Young and Ligthart (Groen PCA,Young IT, Ligthart G: A comparison of different focus functions for use in autofocus algorithms Cytometry 6:81-91, 1985) compared 11 autofocus functions under brightfield using an electron microscope grid and a metaphase spread and Vollath 5 (Vollath D: Automatic Focusing by Correlative Methods. J Microsc 147:279-288, 1987) tested an autocorrelation function under brightfield using a pearlitic steel specimen. Groen et al. concluded that three autofocus functions, i.e.. two gradient functions and the intensity variance, performed the best. However, some autofocus functions that performed well on one specimen did not perform well on others and the authors cautioned against extrapolating the results to other imaging modes and specimens.

EP A 0163 394 describes an autofocusing arrangement, incorporated in a system in which an optical image is focused onto a plane, and comprises a sensor assembly with at least two arrays of sensor devices, one array being positioned in front of the plane and the other behind the plane. From these first and second arrays signals are derived representations of the image received by said sensor devices. However, EP A 0 163 394 does not describe a device for acquiring a volume image, nor does the reference suggest using the described device to acquire a volume image. The reference only shows an arrangement of sensors that enable an autofocus calculation and a focus adjustment to be performed with respect to a single field.

Similarly, DE A 4 226 523 shows and describes a microscope stage that is static in the direction perpendicular to the optical axis (focus direction), and discloses no method for keeping the stage in focus during scanning of the stage in a lateral direction. As with the previously discussed EP reference, this reference describes nothing more than focus analysis with reference to a single microscope field, without considering scanning over a plurality of microscope fields to obtain a "volume image".

The uncertainty in applying autofocus test results from one microscope method to another led to the present invention. The development of the present invention included exploring autofocus performance in microscopy of fluorescent stained biologic specimens. The fluorescent signal can be used directly for autofocus. However, problems summarised by others, such as Chen (Chen LB: Fluorescent labelling of mitochondria, in Fluorescence Microscopy of Living Cells in Culture, Part A, Wang YL and Taylor DL, eds. Academic Press, San Diego. 103-123, 1989), including photobleaching and the formation of free radicals singlet oxygen, and heat, can create conditions under which minimising fluorescent excitation becomes critical. The most critical conditions probably occur in analysing live cells. If the signal is weak and antiphotobleaching agents cannot be used because oftoxicity, the signal could easily be completely lost in the 5 - 10 video frames of exposure required for autofocus. In addition, the fluorescence by-products themselves are toxic, and excessive exposure could alter the results or damage living cells. Therefore it is desirable to find a non-destructive imaging technique for autofocus. With brightfield microscopy, fluorescent stained cells appear unstained, showing very little contrast. Phase-contrast microscopy, on the other hand, gives high contrast images of unstained cells and is more useful for autofocus. For these reasons, autofocus function performance was tested for both phase contrast and fluorescence microscopy. More details of different approaches for autofocus can be found in the doctoral dissertation of Jeffrey H Price entitled Scanning Cytometry for Cell Monolayers, University of California, San Diego. 1990.

### DISCLOSURE OF INVENTION

The present solution to the problem of fast and reliable autofocus of cellular components from photosensitive specimens and live cells in a system capable of scanning multiple microscope fields is the instant autofocus system for scanning microscopy designed to automate, simplify, accelerate, and improve the quality of the process. The goal of the autofocus system is to accurately and automatically position the focus positioner, or focus mechanism, of the microscope so as to gather information and present it for further processing.

### BRIEF DESCRIPTION OF DRAWING

The objects, advantages and features of this invention will be more readily appreciated from the following detailed description, when read in conjunction with the accompanying drawing, in which:
Figure 1 is a microscopic system schematic that illustrates the operation of an autofocus system using volume imaging according to the invention;
Figures 2A and 2B are block diagrams of a first embodiment of a volume imaging apparatus;
Figures 3A and 3B are diagrams of a second embodiment of a volume imaging apparatus;
Figure 4 illustrates a microscope field being scanned by a volume imaging array according to the invention;
Figure 5 is an illustration of a buffer for image alignment in the volume imaging apparatus;
Figure 6 is a schematic representation of a volume image stored in a buffer of Figure 5;
Figure 7 is a flow diagram illustrating the autofocus procedure using the volume imaging apparatus;
Figure 8 is a plot showing a optical quality metric for best focus selection using volume imaging; and
Figure 9 is an embodiment of a volume imaging autofocus system using optical highpass filtration.

### AUTOFOCUS USING VOLUME IMAGING WITH CONTINUOUS SCANNING

The speed of my autofocus technique may be increased with a volume imaging apparatus that continuously acquires an image of the volume of an image object that is being examined by a microscope. The image includes a set of images obtained at respective two-dimensional image planes that are offset vertically. Hereinafter such an image is referred to as a "volume image" or a "three-dimensional image".

This embodiment is based upon my critical realization that a volume image of a portion of an image object being examined by microscope can be obtained by an apparatus that includes (1) a plurality of imaging devices, each imaging device positioned at a respective image of a plurality of substantially parallel image planes, where each image plane is displaced in a particular dimension with respect to each other image plane, and (2) an image forming apparatus coupled to the plurality of imaging devices that forms a plurality of electronic image representations, each electronic image representation representing an image at a respective image plane of the plurality of image planes.

Each electronic image representation represents a section of the image object that is displaced in the particular dimension from all other sections of the same image object.

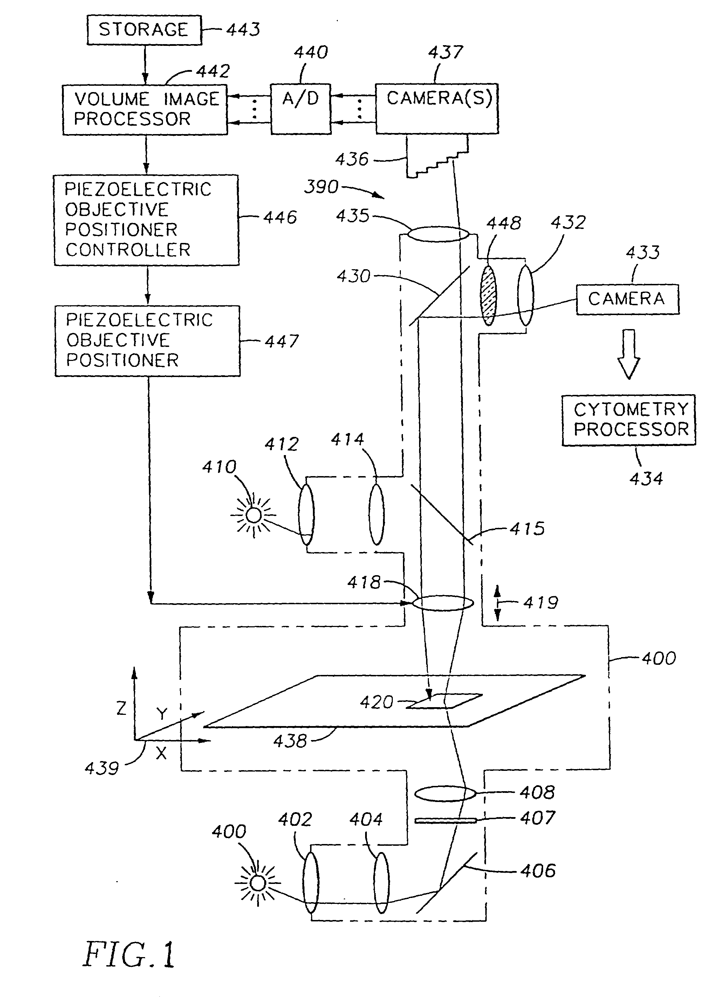

To support autofocus in a scanning microscope, the volume imaging apparatus is scanned continuously ahead of a specimen imaging apparatus. Both the volume imaging apparatus and the specimen imaging apparatus observe the same image object through the same microscope optics. Therefore, autofocus can be implemented by the analytical methods of a autofocus technique as described in EP-A-0 769 159 (European Application 95925491.3). As will become clear, the volume imaging apparatus does not require incremental positioning of the microscope in the Z dimension in order to obtain a volume image. Therefore, it is not necessary to stop at each microscope field to obtain a set of images by incrementally positioning the microscope stage in the Z dimension. Accordingly, this embodiment achieves a very important objective of speeding up the autofocusing technique illustrated in Figures 1-12, of EP-A-0 769 159 (European Application 95925491.3).

Figure 1 illustrates, in hybrid block/schematic form, the invention in a system that fully automates continuously-scanning autofocusing in a microscope 390. The microscope 390 comprises two overlapping optical systems, one for volume imaging, and one for fluorescence imaging. Preferably, the microscope 390 is an epifluorescent upright microscope with phase contrast optics. The fluorescence imaging optical system includes an epi-illumination light source 410 which illuminates an image object, with the aid of a collector lens 412 and a relay lens 414, a fluorescence filter block 415, with its emission interference filter removed and placed at 448, and a piezoelectric-positioned objective lens 418 that is adjustable bidirectionally along the arrow 419. The epi-illumination provided by the light source causes an image object (in this case, a microscope field 420 with cells) to fluoresce, with the fluorescent emissions passing through the objective lens 419 and the filter block 415 to a dichroic mirror 430 which reflects the fluorescent emissions through the interference filter 448 and a relay lens 432 onto a CCD camera 433. The output of the camera 433 is provided to a cytometry processor 434 for processing fluorescent images of the cells in the microscope field 420.

The volume-imaging optical system includes a trans-illumination light source 400 that provides illumination of the image object for phase-contrast optics including a collector lens 402 and a relay lens 404, a mirror 406 which reflects the trans-illumination through a wide band pass interference filter 407 (for example, a 600 nm ± 50 nm bandpass filter) which separates light used for autofocusing from the fluorescence excitation and emission wavelengths (typically, 365nm and 480nm for DAPI). Manifestly, the trans-illumination wavelength can easily be changed to accommodate other fluorescence wavelengths. The trans-illumination light is separated from the emitted fluorescence light by the dichroic mirror 430 and imaged through the relay lens 435 with a volume imaging apparatus that includes a volume imaging array 436 and an array of cameras 437. The cameras of the array 437 can comprise, for example, time-delay-and-integration (TDI) CCD cameras. Preferably, the cameras of the array 437 operate in parallel, with their outputs (hereinafter, "electronic image representations") converted from analog to digital (A/D) format through A/D circuits 440. The parallel converted electronic image representations are provided from the A/D circuit 440 to a volume image processor 442 (that includes storage 443) for calculating a best focus from the electronic image representations of the camera array 437. The best focus output of the volume image processor 442 is provided to a piezoelectric objective positioner controller 446 that operates a piezoelectric objective positioner 447. The piezoelectric objective positioner 447 positions (or repositions) the objective lens 418 at (to) the current best focus position as determined by the volume image processor 442.

The microscope 390 is motorized by means not shown for scanning in the xy plane and for movement on the Z axis as indicated by the axes 439.

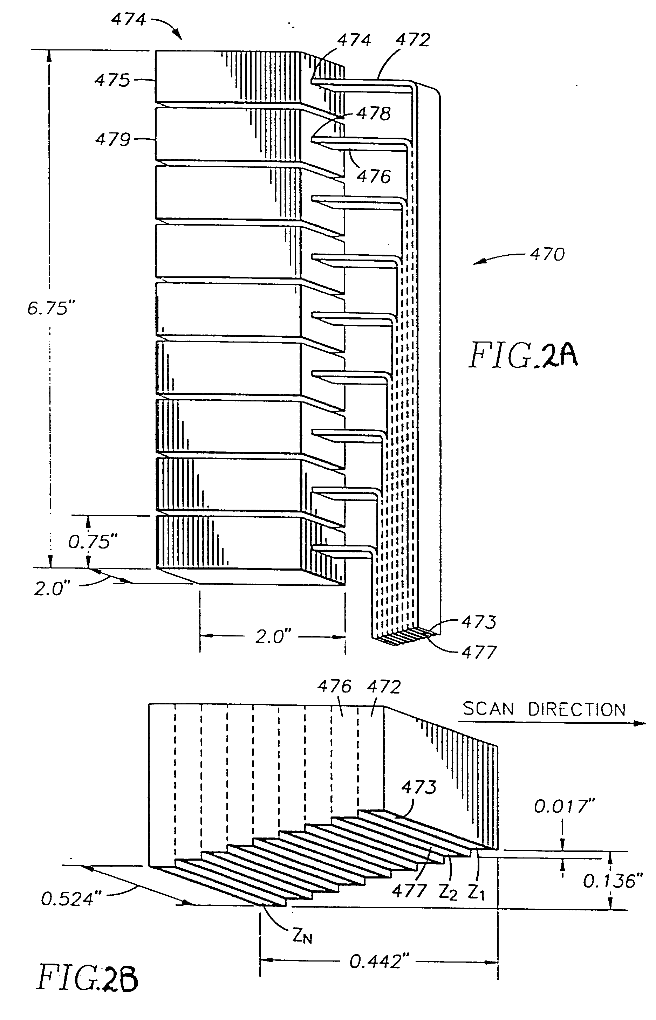

The optical principle of volume imaging according to the invention may be understood with reference to Figure 2A and Figure 2B. Volume imaging is based on the idea that within a reasonable vertical distance (several microns) of best focus at an image forming microscope plane ("image object plane") is an in-focus volume consisting of adjacent optical planes. This can be demonstrated by a simple experiment performed on a microscope with a video camera and display. First, an image object is placed in focus and displayed on the display. Then the video camera is moved a short distance along the optical axis. This will cause the image to defocus. Next, with the new position of the video camera retained, the focus knob on the microscope is adjusted to reacquire sharp focus. This image object-objective focal distance is changed by a few microns in this last step. Thus, relative to the objective face, a new optical plane is brought into focus. Within a reasonable vertical distance, this does not degrade optical performance. The means for parallel acquisition of such an image volume is shown in Figures 2A and 2B.

In Figure 2A, there is shown an array 470 of optical light pipes (optical fibers). The optical light pipes of the array 470 are coupled to an array 474 of CCD cameras. In this regard, each optical light pipe has two ends, a first end being held together with corresponding first ends of the other optical light pipes in a stepped array that is magnified in Figure 2B, and a second end connected to a respective CCD camera. For example, the optical light pipe 472 includes first and second ends, 473 and 474, with the second end 474 coupled to the CCD camera 475. The optical light pipe 476 includes first and second ends 477 and 478, with the second end 478 connected to the CCD camera 479. The first ends 473 and 477 of the optical light pipes 472 and 476 are held together in the stepped array illustrated in Figure 2B. As Figure 2B shows, the first ends of the optical light pipes, including the ends 473 and 477 are disposed in substantially longitudinal array, with each respective first end being positioned at a respective image plane of a plurality of image planes. For example, the end 473 is positioned at an image plane designated as Z₁, while the end 477 is positioned at a second image plane denoted as Z₂. Figure 2B shows that, for n light pipes, the stepped, substantially longitudinal array of optical light pipe first ends defines a corresponding array of image planes where each image plane is displaced in a particular direction (the Z dimension of this embodiment) with respect to each other image plane. Thus, the image plane Z₁ is vertically upwardly displaced from the image plane Z₂, while the image plane Zₙ is vertically downwardly displaced from the image planes Z₁ and Z₂. The stepped array of first ends is offset in the Z direction from an image object plane (a surface of a microscope slide, for example) on which an image object (a stained cell, for example) rests.

Manifestly, each optical light pipe constitutes an imaging device and each camera is an image forming apparatus. Referring again to Figure 1, the array of optical light pipes 470 corresponds to the volume imaging array 436 of Figure 1, while the array 474 of CCD cameras corresponds to the camera array 437 of Figure 1.

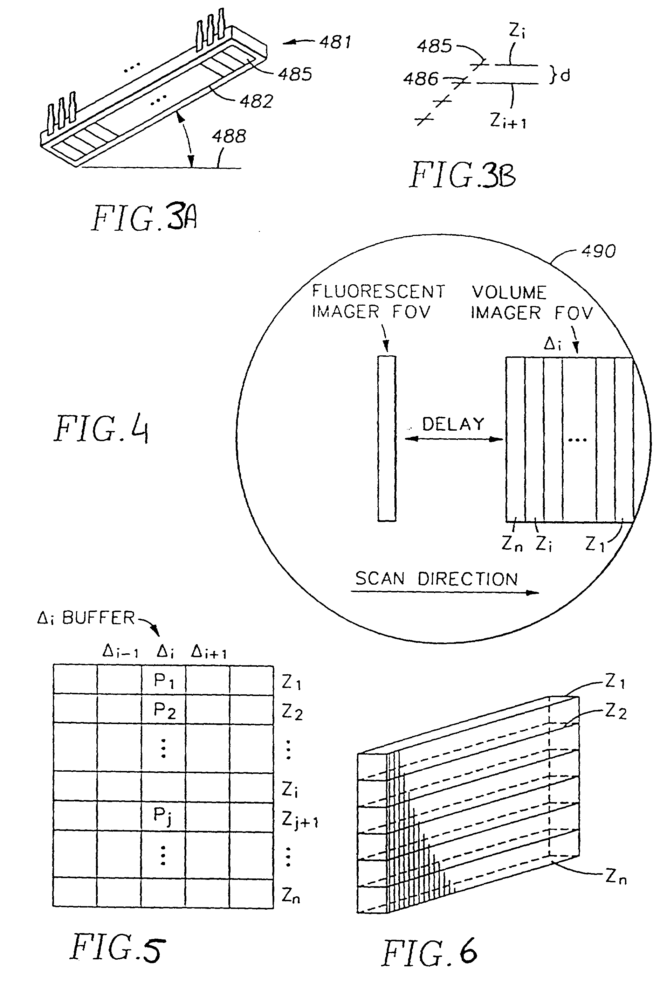

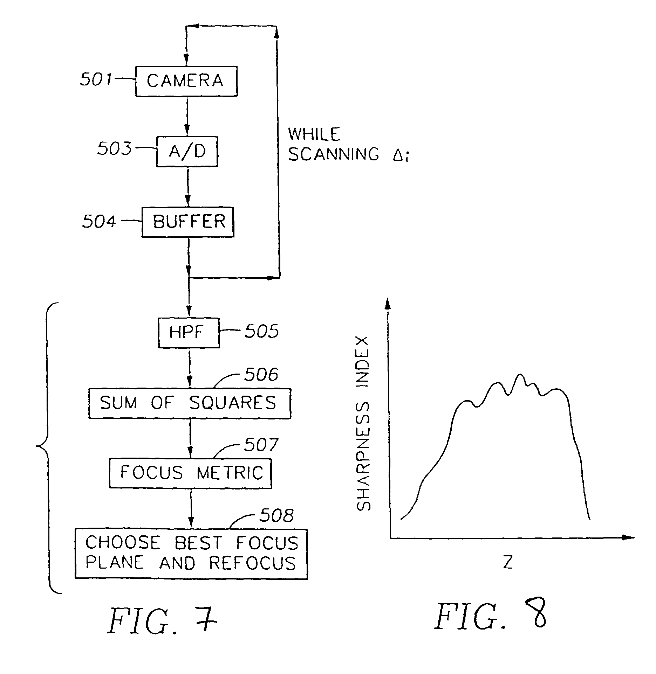

Figures 3A and 3B illustrate a second embodiment of a plurality of imaging devices according to the invention in the form of a linear image sensor 481 having a linear array 482 of active photo elements, such as the photo element 485. The image sensor 480 is tilted with respect to an image object plane 488 where an image object is located so that each photo element intersects a respective image plane which is displaced in the vertical dimension with respect to each other image plane. Thus, in Figure 3B, the image plane Zᵢ is intersected by a photo electric element 485, while the image plane Zᵢ₊₁, offset by vertical distance d, is intersected by another photo electric element 486. With this embodiment of imaging devices, the images are formed by CCD camera electronics which operate in the same manner as the electronics of the cameras in the array 474 of Figure 1.

With reference now to Figure 1, Figure 2A and Figure 2B, the microscope 370 includes a conventional stage upon which a microscope slide 438 is carried. The microscope slide 438 is prepared for fluorescent cytometry as described above and is scanned over a plurality of microscope fields in a raster pattern automatically as described above. Such scanning is in the xy plane of the axes 439. With the stage moving at a constant velocity in x, adjacent image planes are sampled by the cameras of the CCD camera array 474 with small, successive time delays. These delays are removed by buffering. The fluorescence image acquired for analysis is collected with a longer delay as shown in Figure 5 to allow for the piezoelectric repositioning time, for example, a maximum of 10 msec, or < 100 micrometer travel in a 500 micrometer square field with a 20x objective. Focus can be calibrated by measuring the difference between the fluorescence image acquired for analysis and the volume image acquired for focusing. In this regard, the differences between the best fluorescence and volume imaging focuses may be measured by repeated scans at slightly different focus levels to compute focus directly from the fluorescence images. The fluorescence focus position may then be set to eliminate the difference between the best focus in fluorescence and volume imaging for subsequent scans.

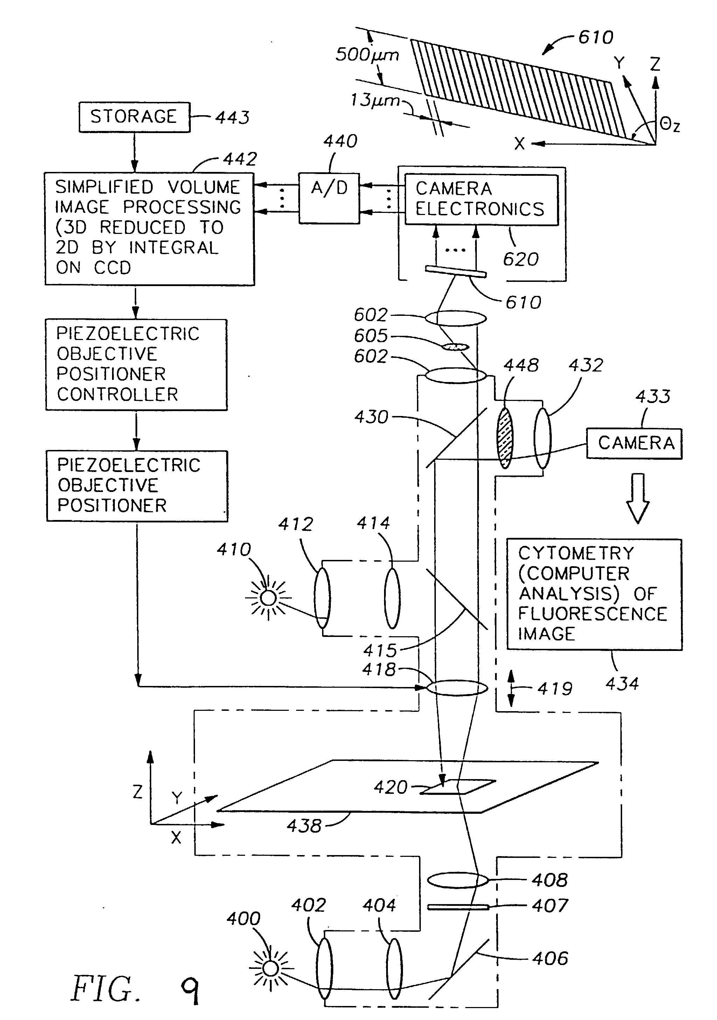

As shown in Figure 4, the stepped ends of the optical light pipe array 470 form a volume imager field of view (FOV) that scans in the scan direction over a portion of a microscope field such as the field 490. Trailing behind the volume imager FOV is a fluorescent imager FOV. With respect to the volume imager FOV, consider a slice of the field having an aspect ratio approximately corresponding to that of each of the rectangular first ends in the stepped array of optical light pipe ends including the ends 473 and 477. The slice is indicated by Δᵢ in Figure 4. As the image planes Z₁-Zₙ are scanned over the slice, a two-dimensional image of the slice is captured by each optical light pipe/CCD camera combination. The image can comprise one or more pixels. Each image, denoted as P, is stored (as an electronic image representation) in a buffer corresponding to the slice in the manner shown in Figure 5. Thus, for a set of successive buffer locations in the buffer for the slice Δᵢ ("the Δᵢ buffer"), as each first end face of the stepped end face array shown in Figure 2B is scanned over the slice, an electronic image representation representing a two-dimensional image at the image plane of an end face is stored at a storage location corresponding to the end face. Thus, an image P₁ formed at image plane Z₁ corresponding to the end face 473 of the optical light pipe 472 is stored in the Δᵢ buffer at the position corresponding to image plane Z₁. In this manner, as the stepped end faces of the optical light pipe array 470 are scanned over the slice, a plurality of electronic image representations Pⱼ are stored in the Δᵢ buffer. As Figure 5 shows, there are buffers provided for an array of slices. Figure 6 shows a volume image stored in the Δᵢ buffer formed by electronic image representations of the two-dimensional images P₁-Pₙ obtained through the image planes Z₁-Zₙ, respectively.

It may be appreciated that an advantage is gained when the volume image is acquired by "tilting" at the image plane (by offsetting the image planes in the vertical direction) rather than by directly tilting the microscope slide. The advantage is due to the fact that vertical magnification is the square of lateral magnification. In the embodiment illustrated in EP-A-0 769 159 (EP 95925491.3) for example, magnification to the video camera CCD chip is about 30x. Therefore, the vertical magnification is about 900x and a 4 µm thick volume of a specimen would be magnified to 3.6 mm at the image plane. This exaggerated vertical magnification simplifies precise sampling of the required optical sections.

I have calculated dimensions of the step array of optical light pipe ends illustrated in Figure 2B based upon assumptions about the dimensions of image objects and available CCD camera technology. The dimensions of this array (shown in Figure 2B) were calculated assuming a 4 µm thick specimen volume magnified through a 20x objective and a 0.9x-2.25x zoom relay lens (available from Nikon) onto 1024 pixel x 96 line TDI CCD arrays with 13 x 13 µm pixels. However, design considerations, particular requirements of an application, and changes in optical and camera technology will manifestly vary these assumptions. Nevertheless, assuming relatively rigid optical light pipes, a well-supported, single package that integrates the optical light pipes with the CCD cameras is required for the embodiment illustrated in Figure 2A and 2B. The package is not shown, but may consist, for example, of a rectangular aluminum frame attaching to both the CCD cameras and the optical light pipes. Assuming a relatively small remote CCD camera (such as a 2.0" x 2.0" x 0.75" camera available from Dalsa) these components may be placed in a conveniently sized package.

The dimensions shown in Figure 2B include a vertical step of 0.017" between optical light pipe end faces for convenience in assembly. This corresponds to a 29.387x lateral magnification and an 863.6x vertical magnification. Using the zoom lens described above, this magnification corresponds to a zoom of 1.04x (out of a possible range of 0.9x-2.25x). A 20x phase/fluorite objective having a field of view with a 710 µm diameter for a 502 µm inscribed square field may be used. Such a field therefore would be magnified to 14.75 mm (0.58'') square at the proposed lateral magnification. This leaves ample room for a trailing CCD that acquires the fluorescence image. The CCD cameras are disclosed as being of the TDI type to increase light sensitivity, which permits the dwell time to be reduced for continuous scanning.

Manifestly, there will be light loss through the optical light pipe interfaces. However, this can be compensated adequately by the brightness range of conventional transmitted microscope lamps. Use of TDI cameras may also decrease a small percentage of random rearrangements of optical fibers common in optical light pipe interfaces and problems with Moire patterns that can occur with improper matching of such optical fibers and at the camera arrays. As is known, any Moire set will be averaged out by TDI cameras. The 2:1 binning of the TDI cameras, both for fluorescence and phase contrast, may also eliminate undersampling and aliasing, without the loss of light accompanied by the usual method of limiting the effective numerical aperture (NA).

Figure 7 illustrates the processing that is used to determine an optical quality metric by processing the image representations according to an autofocus function described in the incorporated patent application. Preferably, the function is a resolution function which sums the squares of the result of highpass filter (HPF). Relatedly, the squared values of the electronic image representations provide augmented interisity values. As Figure 6 shows, an electronic image representation representing an image at a respective image plane is acquired at the output of a CCD camera at step 501, digitized at step 503, and buffered at step 504. The sequence 501, 503, 504 continues until an electronic image representation for each image plane of a plurality of image planes is acquired and buffered. A measure of resolution is acquired by summing the squares of the result of highpass filtration of the digitized images in steps 505 and 506. A focus metric is constructed in step 507 and the image plane where the best focus occurs as indicated by the focus metric is chosen in step 508 and the microscope is refocused by the autofocus mechanism, if necessary. A representative focus metric is illustrated in Figure 8 as a plot of a sharpness index indicating the measure of resolution at each image plane.

Calculation of the optical quality metric (resolution, or sharpness) requires processing of the image representations. Assuming nine image planes such as would be acquired by the stepped end face of Figure 2B, nine parallel electronic image representations would have to be processed. In combination, this would produce a 90 MHz pixel rate that must be processed in parallel. Preferably, for each electronic image representation, a 1 x 3 convolution (- 1 2 - 1) will be applied for high pass filtration, followed by calculation of the sum of the squares. Manifestly, the volume image processor (442 of Figure 1) should be capable of processing the image representations in parallel. Such parallel processing is well-supported by pipeline image processors such as the Imaging Technology MVC 40 MHz image processor. Such a system comprises a set of mother boards, each having a three-channel, eight-bit A/D converter, image buffers, and processing pipelines. For example, nine image streams can be processed in an Imaging Technology processor by three sets of mother boards.

The volume image processing of the invention can be further improved by relocating the highpass filtration function. For example, in the embodiment of the autofocus system illustrated in Figure 9, the highpass filtration function is located in the optics of the microscope 390 at a backfocal, Fourier or pupil plane. In this embodiment, the plurality of imaging devices comprise an array 610 of photo elements that corresponds to the tilted linear array of high sensitivity photo electric elements shown in Figure 3A and Figure 3B. In this case, the array 610 of photo electric elements is coupled to camera electronics 620. In the embodiment of the autofocus system illustrated in Figure 9 (in which reference numerals identical with those in Figure 1 represent identical elements), the volume image processor 442 processes highpass filtered electronic image representations to produce the optical quality metric; this processor is simplified in that the electronic image representation output by the camera electronics 620 has the form of the integral I_{x(t)z} shown in Figure 9. Manifestly, this integral reduces the cost of performing autofocus calculations, when compared with the volume imaging embodiment illustrated in Figure 1. In Figure 1, the volume image processor 442 must process many two dimensional image representations that make up the three dimensional image. With a highpass function is performed optically as shown in Figure 9, the electronic image representation processing is reduced. With the use of Fourier relay optics 602 to produce a projected pupil plane (which is a Fourier transform plane), an optical highpass filter 605 can be implemented as an attenuation (amplitude), or phase filter. See "Optical Information Processing," (S.H. Lee, Springer-Verlag: New York, 1981) for the principles of optical filtration. In operation, the optical highpass filter 605 blocks the low frequency portion of an image. The high frequency, or edge information is retained, and the intensity of the high frequency information is proportional to focus. Thus, the intensity at a particular image plane provides a direct measure of sharpness and the focus metric of Figure 8 can be derived by simply plotting intensity (as sharpness) versus image plane. The intensity (sharpness) at many different image planes is measured using the tilted high sensitivity photo electric element array 610. This requires only a single image processor to buffer and remove delays from the electronic image representations and to calculate best focus. Essentially, the autofocus system embodiment of Figure 9 reduces the cost of implementation by replacing three image processing boards, nine CCD cameras and one optical light pipe array with one image processing board, one tilted photo electric element array, and one set of camera electronics.

Continuous volume imaging could also rapidly scan a volume using the confocal microscope principle, as with either slit or spot confocal apertures. With a slit aperture, longitudinal CCD arrays on the CCD cameras which form images at image planes may be illuminated through a slit confocal aperture. Assuming linear CCD arrays in each camera of a single pixel in width, each linear CCD array would image a single plane. However, the image object would be illuminated with a corresponding confocal slit of light for each linear CCD array, resulting in higher resolution, especially in the vertical direction, but also laterally. Thus, an array of stationary slits, each illuminating a respective image plane, in combination with moving a microscope stage at a constant velocity in one direction, will create a real-time volume-imaging confocal microscope. As with the array of confocal slits, an array of confocal spots such as is taught in U.S. Patent 5,239,178 could also be arranged at different image plane positions and combined with stage scanning to create even higher resolution.

Clearly, other embodiments and modifications of the present invention will occur readily to those of ordinary skill in the art in view of these teachings. Therefore, this invention is to be limited only by the following claims, which include all such embodiments and modifications.

## Claims

1. An autofocus apparatus for scanning an image object (420) in scanning microscopy comprising an image forming apparatus (437, 620) and a storage means (443),
characterized in that:
the image forming apparatus is coupled to a plurality of imaging devices (470, 482) in which at least one imaging device (472, 485) is positioned at a respective image plane (Z₁) of a plurality of image planes (Z₁-Zₙ), where each image plane is displaced in a third dimension with respect to each other image plane (Zᵢ₊₁), for forming a plurality of electronic image representations representing images at respective image planes of the plurality of image planes when the imaging devices are scanned over the image object, wherein each electronic image representation represents a section of the image object that is displaced in the third dimension from all other sections of the same image object; and
the storage means (443) is coupled to the image forming apparatus for acquiring a volume image by storing successive pluralities of electronic image representations when the imaging devices are scanned over the image object (420), whereby a volume image is formed to produce a best-focus position.

2. The apparatus of Claim 1. further including processing means (442):
a) coupled to the image forming apparatus (437, 620) for determining an optical quality metric by combining electronic image representations, or
b) coupled to the storage means (443) for generating a focus location signal by applying a measurement function to the electronic image representations.

3. The apparatus of Claim 2. further comprising a focus mechanism (418) for a microscope (390) , and a means ( 446,447) for causing the focus mechanism to adjust the focus of the microscope in response to the focus location signal, generated by said processing means (442).

4. The apparatus of any one of Claims 1 to 3, wherein the plurality of imaging devices includes a plurality of optical conductors (470), each optical conductor having a first end face (473, 477) positioned at a respective image plane and a second end face (474, 478) coupled to the image forming apparatus, which preferably includes a plurality of charge-couple device (CCD) cameras (474), such that the second end face (474, 478) is coupled to a respective CCD camera (475, 479).

5. The apparatus of any one of Claims 1 to 3, wherein the plurality of imaging devices (480) includes photo-electric devices(485) disposed in a substantially elongate array (482).

6. The apparatus of Claim 4, wherein each first end face (473) is offset in the third dimension from each other first end face (477).

7. The apparatus of Claim 5, wherein the elongate array of photo electric devices (482) is tilted with respect to an image object plane (488), each image plane (Zᵢ) of the plurality of image planes being intersected by at least one photo electric device (485) of the elongate array of photo electric devices.

8. The apparatus of any one of Claims 1 to 3, wherein the processing means includes:
a plurality of image buffers (504), each image buffer for storing a plurality of electronic representations of at least a portion of an image;
a high-pass filter (505) coupled to a respective buffer for providing a filtered electronic representation; and
means (506) coupled to the highpass pass filter (505) for combining a plurality of filtered electronic representations to produce the optical quality metric (507), or focus metric, which combining means preferably includes means for obtaining augmented intensity values for the filtered electronic representations and means for indicating a value of the optical quality metric, or focus metric, for each image based upon the augmented intensity values.

9. The apparatus of any one of Claims 1 to 3, further including:
an optical high pass filter (605) positioned between the plurality of imaging devices and an image object plane; and
processing means (442) coupled to the image forming apparatus for determining an optical quality metric by combining electronic range image representations, which processing means preferably includes a plurality of image buffers, each image buffer for storing a plurality of filtered electronic image representations of at least a portion of an image and means coupled to the plurality of image buffers for combining a plurality of filtered electronic image representations to produce the optical quality metric, preferably image sharpness.

10. A method of volume imaging in scanning microscopy using a plurality of imaging devices (470, 482) in which at least one imaging device (472, 485) is positioned at an image plane (Z₁) of a plurality of image planes (Z₁-Zₙ), where each image plane is displaced in a third dimension with respect to each other image plane (Zᵢ₊₁), the method comprising the steps of:
orienting the plurality of imaging devices (470, 482) such that each imaging device observes an image object (420) in a corresponding image object plane;
scanning the plurality of imaging devices (470, 482) across the image object (420) to obtain a plurality of images (P₁-Pₙ) of the image object (420), each image of the plurality of images obtained in a respective imaging device;
converting (503) the plurality of images into a plurality of electronic image representations,
storing (504) the plurality of electronic image representations; and
obtaining a volume image by storing successive pluralities of electronic representations.

11. The method of Claim 10, wherein the plurality of imaging devices includes:
a) a plurality of optical conductors (470), each optical conductor having a first end face (473) positioned at a respective image plane (Z₁), the step of orienting including positioning the first end faces with respect to the image object plane such that each image plane is substantially parallel to and vertically displaced from the image object plane, or
b) a plurality of photo electric devices (481) disposed in an elongate array having a longitudinal dimension, the step of orienting including disposing the elongate array of photo electric devices (482) such that an extension of the longitudinal dimension intersects the image object plane (488) at a non-orthogonal angle.

12. A method of autofocussing for a microscope (390) having a focus mechanism (446, 447, 418) and a plurality of imaging devices (470, 482), each defining a respective image plane, the method comprising the steps of:
acquiring (437, 620) a plurality of electronic image representations of an image object (420) on an image object plane, wherein each electronic image representation represents an image of the image object at a respective image plane (Zᵢ) of a plurality of image planes defined by the plurality of imaging devices (470, 482), in which each image plane is displaced in a third dimension with respect to every other image plane and the plurality of imaging devices are scanned across the image object (420);
forming a volume image by storing (504, 443) successive pluralities of electronic image representations,
applying stored electronic image representations to a highpass filter (505) to obtain a plurality of filtered electronic image representations;
applying a measurement function (506) to the plurality of filtered electronic image representations to obtain a plurality of image sharpness values (507);
combining the image sharpness values by relating the image sharpness values to image plane positions;
selecting (508) an image plane position related in the combining step to a high image sharpness value; and
adjusting focus (446, 447) of the microscope based on the selected image plane position.

## Patentansprüche

1. Vorrichtung zum automatischen Fokussieren bzw. selbsttätigen Einstellen, um in der Rastermikroskopie ein Bildobjekt (420) abzutasten bzw. zu scannen, umfassend eine Bildformungsvorrichtung (437, 620) und eine Speichereinrichtung (443), dadurch gekennzeichnet, daß:
die Bildformungsvorrichtung mit einer Anzahl von Abbildungseinrichtungen (470, 482) verbunden ist, wobei zumindest eine Abbildungseinrichtung (472, 485) in einer jeweiligen Bildebene (Z₁) einer Anzahl von Bildebenen (Z₁-Zₙ) positioniert ist und jede Bildebene in einer dritten Dimension bezüglich jeder anderen Bildebene (Zᵢ₊₁) versetzt ist, um eine Anzahl von elektronischen Bilddarstellungen zu erzeugen, die Bilder in jeweiligen Bildebenen der Anzahl von Bildebenen darstellen, wenn die Abbildungseinrichtungen über das Bildobjekt gescannt werden, wobei jede elektronische Bilddarstellung einen Abschnitt des Bildobjekts darstellt, der in der dritten Dimension von allen anderen Abschnitten desselben Bildobjekts versetzt ist; und
daß die Speichereinrichtung (443) mit der Bildformungsvorrichtung verbunden ist, um ein räumliches bzw. Volumenbild zu erfassen, indem aufeinanderfolgende Mehrzahlen von elektronischen Darstellungen gespeichert werden, wenn die Abbildungseinrichtungen über das Bildobjekt (420) gescannt werden, wodurch ein Volumenbild ausgebildet wird, um die Position der besten Fokussierung zu erzeugen.

2. Vorrichtung nach Anspruch 1, weiterhin umfassend eine Verarbeitungseinrichtung (442):
a) die mit der Bildformungsvorrichtung (437, 620) verbunden ist, um durch Kombinieren bzw. Vereinen von elektronischen Bilddarstellungen eine Metrik bzw. ein Maß für die optische Qualität zu bestimmen, oder
b) die mit der Speichereinrichtung (443) verbunden ist, um durch Anwenden einer Meßfunktion auf die elektronischen Bilddarstellungen ein Fokuspositionssignal zu erzeugen.

3. Vorrichtung nach Anspruch 2, weiterhin umfassend einen Fokusmechanismus (418) für ein Mikroskop (390) sowie ein Mittel (446, 447), um zu bewirken, daß der Fokusmechanismus den Fokus des Mikroskops in Antwort auf das bzw. in Abhängigkeit von dem Fokuspositionssignal einstellt, das von der Verarbeitungseinrichtung (442) erzeugt wird.

4. Vorrichtung nach einem der Ansprüche 1 bis 3, bei der die Anzahl von Abbildungseinrichtungen eine Anzahl von optischen Leitern (470) umfaßt, wobei jeder optische Leiter eine erste Stirnfläche (473, 477), die in einer jeweiligen Bildebene positioniert ist, und eine zweite Stirnfläche (474, 478) aufweist, die mit der Bildformungsvorrichtung verbunden ist, welche vorzugsweise eine Anzahl von Kameras (474) mit ladungsgekoppelten Elementen bzw. von CCD-Kameras umfaßt, so daß die zweite Stirnfläche (474, 478) mit der jeweiligen CCD-Kamera (475, 479) verbunden ist.

5. Vorrichtung nach einem der Ansprüche 1 bis 3, bei der die Anzahl von Abbildungseinrichtungen (480) photoelektrische Einrichtungen (485) umfaßt, die in einem insgesamt länglichen Feld bzw. Array (482) angeordnet sind.

6. Vorrichtung nach Anspruch 4, bei der jede erste Stirnfläche (473) in der dritten Dimension von jeder anderen ersten Stirnfläche (477) versetzt ist.

7. Vorrichtung nach Anspruch 5, bei der das längliche Feld aus photoelektrischen Einrichtungen (482) in Bezug auf eine Bildobjektebene (488) verkippt ist, wobei jede Bildebene (Zᵢ) der Anzahl von Bildebenen von mindestens einer photoelektrischen Einrichtung (485) des länglichen Feldes von photoelektrischen Einrichtungen geschnitten wird.

8. Vorrichtung nach einem der Ansprüche 1 bis 3, bei der die Verarbeitungseinrichtung umfaßt:
eine Anzahl von Bildpuffern bzw. Bildspeichern (504), wobei jeder Bildpuffer zum Speichern einer Anzahl von elektronischen Darstellungen von zumindest einem Abschnitt eines Bildes vorgesehen ist;
einen Hochpaßfilter (505), der mit einem jeweiligen Puffer verbunden ist, um eine gefilterte elektronische Darstellung bereitzustellen; und
ein Mittel (506), das mit dem Hochpaßfilter (505) verbunden ist, um eine Anzahl von gefilterten elektronischen Darstellungen zu kombinieren bzw. zu vereinen, um die Metrik bzw. das Maß (507) für die optische Qualität zu erzeugen, oder eine Fokus-Metrik bzw. ein Fokus-Maß, welches Vereinigungsmittel vorzugsweise Mittel zum Erhalten von erhöhten Intensitätswerten für die gefilterten elektronischen Darstellungen und Mittel umfaßt, um einen Wert des Maßes für die optische Qualität oder des Fokus-Maßes anzuzeigen, und zwar für jedes Bild und basierend auf den erhöhten Intensitätswerten.

9. Vorrichtung nach einem der Ansprüche 1 bis 3, weiterhin umfassend:
einen optischen Hochpaßfilter (605), der zwischen der Anzahl von Abbildungseinrichtungen und einer Bildobjektebene angeordnet ist; und
eine Verarbeitungseinrichtung (442), die mit der Bildformungsvorrichtung verbunden ist, um ein Maß für die optische Qualität durch Kombinieren bzw. Vereinen von elektronischen Bereichs-Bilddarstellungen zu bestimmen, welche Verarbeitungseinrichtung vorzugsweise eine Anzahl von Bildpuffern bzw. -speichern umfaßt, wobei jeder Bildpuffer zum Speichern einer Anzahl von gefilterten elektronischen Bilddarstellungen von zumindest einem Abschnitt eines Bildes vorgesehen ist, sowie Mittel, die mit der Anzahl von Bildpuffern verbunden sind, um eine Anzahl von gefilterten elektronischen Bilddarstellungen zu vereinen bzw. zu kombinieren und das Maß für die optische Qualität, vorzugweise die Bildschärfe, zu erzeugen.

10. Verfahren zur räumlichen bzw. Volumenabbildung in der Rastermikroskopie unter Verwendung einer Anzahl von Abbildungseinrichtungen (470, 482), wobei zumindest eine Abbildungseinrichtung (472, 485) in einer Bildebene (Z₁) einer Anzahl von Bildebenen (Z₁-Zₙ) positioniert ist und jede Bildebene in einer dritten Dimension in Bezug auf jede andere Bildebene (Zᵢ₊₁) versetzt ist, welches Verfahren die folgenden Schritte umfaßt:
die Anzahl von Abbildungseinrichtungen (470, 482) wird so orientiert, daß jede Abbildungseinrichtung ein Bildobjekt (420) in einer entsprechenden Bildobjektebene beobachtet;
die Anzahl von Abbildungseinrichtungen (470, 482) wird über das Bildobjekt (420) gescannt bzw. getastet, um eine Anzahl von Bildern (P₁-Pₙ) des Bildobjekts (420) zu erhalten, wobei jedes Bild der Anzahl von Bildern in einer jeweiligen Abbildungseinrichtung erhalten wird;
die Anzahl von Bildern wird in eine Anzahl von elektronischen Bilddarstellungen gewandelt (503);
die Anzahl von elektronischen Bilddarstellungen wird gespeichert (504); und
durch Abspeichern aufeinanderfolgender Anzahlen von elektronischen Darstellungen wird ein räumliches bzw. Volumenbild erhalten.

11. Verfahren nach Anspruch 10, bei dem die Anzahl von Abbildungseinrichtungen umfaßt:
a) eine Anzahl von optischen Leitern (470), wobei jeder optische Leiter eine erste Stirnfläche (473) aufweist, die in einer jeweiligen Bildebene (Z₁) positioniert ist, wobei der Orientierungsschritt das Positionieren der ersten Stirnflächen in Bezug auf die Bildobjektebene umfaßt, so daß jede Bildobjektebene im wesentlichen parallel zu und vertikal von der Bildobjektebene versetzt ist, oder
b) eine Anzahl von photoelektrischen Einrichtungen (481), die in einem länglichen Feld bzw. Array mit einer Längsabmessung angeordnet sind, wobei der Orientierungsschritt das Anordnen des länglichen Feldes von photoelektrischen Einrichtungen (482) umfaßt, so daß eine Verlängerung der Längsabmessung die Bildobjektebene (488) unter einem nicht-orthogonalen Winkel schneidet.

12. Verfahren zum automatischen Fokussieren bzw. selbsttätigen Einstellen, für ein Mikroskop (390) mit einem Fokus-Mechanismus (446, 447, 418) und einer Anzahl von Abbildungseinrichtungen (470, 482), die jeweils eine Bildebene festlegen, welches Verfahren die folgenden Schritte umfaßt:
es wird eine Anzahl von elektronischen Bilddarstellungen eines Bildobjekts (420) auf einer Bildobjektebene erfaßt (437, 620), wobei jede elektronische Bilddarstellung ein Bild des Bildobjekts in einer jeweiligen Bildebene (Zᵢ) einer Anzahl von Bildebenen darstellt, die durch die Anzahl von Abbildungseinrichtungen (470, 482) festgelegt werden, wobei jede Bildebene in einer dritten Dimension in Bezug auf jede andere Bildebene versetzt ist und die Anzahl von Abbildungseinrichtungen über das Bildobjekt (420) gescannt bzw. getastet wird;
durch Speichern (504, 443) aufeinanderfolgender Anzahlen von elektronischen Bilddarstellungen wird ein räumliches bzw. Volumenbild ausgebildet;
gespeicherte elektronische Bilddarstellungen werden an einen Hochpaßfilter (505) angelegt, um eine Anzahl von gefilterten elektronischen Bilddarstellungen zu erhalten;
es wird eine Meßfunktion (506) auf die Anzahl von gefilterten elektronischen Bilddarstellungen angewendet, um eine Anzahl von Bildschärfe-Werten (507) zu erhalten;
die Bildschärfe-Werte werden durch Zuordnen der Bildschärfe-Werte zu den Positionen der Bildebenen kombiniert bzw. vereint;
es wird die Position einer Bildebene ausgewählt (508), die in dem Kombinierungs- bzw. Vereinigungsschritt einem Wert mit großer Bildschärfe zugeordnet ist; und
auf Grundlage der ausgewählten Bildebenenposition wird der Fokus (446, 447) des Mikroskops eingestellt.

## Revendications

1. Dispositif de mise au point automatique pour balayer un objet image (420) dans une microscopie à balayage comportant un dispositif de formation d'image (437, 620) et des moyens de mémorisation (443), caractérisé en ce que :
le dispositif de formation d'image est relié à une pluralité de dispositifs d'imagerie (470, 482) dans lesquels au moins un dispositif d'imagerie (472, 485) est positionné au niveau d'un plan image respectif (Z₁) parmi une pluralité de plans image (Z₁ à Zₙ), où chaque plan image est déplacé dans une troisième dimension par rapport à chaque autre plan image (Z_{i + 1}), pour former une pluralité de représentations d'image électroniques représentant des images au niveau des plans image respectifs de la pluralité de plans image lorsque les dispositifs d'imagerie sont balayés sur l'objet image, dans lequel chaque représentation d'image électronique représente un tronçon de l'objet image qui est déplacé dans la troisième dimension par rapport à tous les autres tronçons du même objet image, et
les moyens de mémorisation (443) sont reliés au dispositif de formation d'image pour acquérir une image de volume en mémorisant des pluralités successives de représentations d'image électroniques lorsque les dispositifs d'imagerie sont balayés sur l'objet image (420), de sorte qu'une image de volume est formée pour produire une position de la meilleure mise au point.

2. Dispositif selon la revendication 1, comportant de plus des moyens de traitement (442) :
a) reliés au dispositif de formation d'image (437, 620) pour déterminer une mesure de qualité optique en combinant des représentations d'image électroniques, ou
b) reliés aux moyens de mémorisation (443) pour produire un signal d'emplacement de mise au point en appliquant une fonction de mesure aux représentations d'image électroniques.

3. Dispositif selon la revendication 2, comportant de plus un mécanisme de mise au point (418) pour un microscope (390), et des moyens (446, 447) pour entraîner le mécanisme de mise au point à ajuster la mise au point du microscope en réponse au signal de localisation de mise au point produit par lesdits moyens de traitement (442).

4. Dispositif selon l'une quelconque des revendications 1 à 3, dans lequel la pluralité de dispositifs d'imagerie comporte une pluralité de conducteurs optiques (470), chaque conducteur optique ayant une première face d'extrémité (473, 477) positionnée au niveau d'un plan image respectif et une seconde face d'extrémité (474, 478) reliée au dispositif de formation d'image, qui comporte de préférence une pluralité de caméras (474) à dispositif de couplage de charges (CCD), de sorte que la seconde face d'extrémité (474, 478) est reliée à la caméra à CCD respective (475, 479).

5. Dispositif selon l'une quelconque des revendications 1 à 3, dans lequel la pluralité de dispositifs d'imagerie (480) comporte des dispositifs photoélectriques (485) disposés dans une rangée pratiquement allongée (482).

6. Dispositif selon la revendication 4, dans lequel chaque première face d'extrémité (473) est décalée dans la troisième dimension par rapport à chaque autre première face d'extrémité (477).

7. Dispositif selon la revendication 5, dans lequel la rangée allongée de dispositifs photoélectriques (482) est inclinée par rapport à un plan d'objet image (488), chaque plan image (Zᵢ) de la pluralité de plans image étant coupé par au moins un dispositif photoélectrique (485) de la rangée allongée de dispositifs photoélectriques.

8. Dispositif selon l'une quelconque des revendications 1 à 3, dans lequel les moyens de traitement comportent :
une pluralité de tampons d'images (504), chaque tampon d'images étant destiné à mémoriser une pluralité de représentations électroniques d'au moins une partie d'une image,
un filtre passe-haut (505) relié à un tampon respectif pour fournir une représentation électronique filtrée, et
des moyens (506) reliés au filtre passe-haut (505) pour combiner une pluralité de représentations électroniques filtrées afin de produire la mesure de qualité optique (507), ou une mesure de mise au point, lesquels moyens de combinaison comportent de préférence des moyens pour obtenir des valeurs d'intensité accrues pour les représentations électroniques filtrées et des moyens pour indiquer une valeur de la mesure de qualité optique, ou de la mesure de mise au point, pour chaque image sur la base des valeurs d'intensité accrues.

9. Dispositif selon l'une quelconque des revendications 1 à 3, comportant de plus :
un filtre passe-haut optique (605) positionné entre la pluralité de dispositifs d'imagerie et un plan d'objet image, et
des moyens de traitement (442) reliés au dispositif de formation d'image pour déterminer une mesure de qualité optique en combinant des représentations d'image électroniques, lesquels moyens de traitement comportent de préférence une pluralité de tampons d'images, chaque tampon d'images étant destiné à mémoriser une pluralité de représentations d'image électroniques filtrées d'au moins une partie d'une image et des moyens reliés à la pluralité de tampons d'images pour combiner une pluralité de représentations d'image électroniques filtrées afin de produire la mesure de qualité optique, de préférence une netteté d'image.

10. Procédé d'imagerie de volume dans une microscopie à balayage en utilisant une pluralité de dispositifs d'imagerie (470, 482) dans lesquels au moins un dispositif d'imagerie (472, 485) est positionné au niveau d'un plan image (Z₁) d'une pluralité de plans image (Z₁ à Zₙ), où chaque plan image est déplacé dans une troisième dimension par rapport à chaque autre plan image (Z_{i + 1}), le procédé comportant les étapes consistant à :
orienter la pluralité de dispositifs d'imagerie (470, 482) de sorte que chaque dispositif d'imagerie observe un objet image (420) dans un plan d'objet image correspondant,
balayer la pluralité de dispositifs d'imagerie (470, 482) à travers l'objet image (420) pour obtenir une pluralité d'images (P₁ à Pₙ) de l'objet image (420), chaque image de la pluralité d'images étant obtenue dans un dispositif d'imagerie respectif,
convertir (503) la pluralité d'images en une pluralité de représentations d'image électroniques,
mémoriser (504) la pluralité de représentations d'image électroniques, et
obtenir une image de volume en mémorisant des pluralités successives de représentations électroniques.

11. Procédé selon la revendication 10, dans lequel la pluralité de dispositifs d'imagerie comporte :
a) une pluralité de conducteurs optiques (470), chaque conducteur optique ayant une première face d'extrémité (473) positionnée au niveau d'un plan image respectif (Z₁), l'étape d'orientation incluant le positionnement des premières faces d'extrémité par rapport au plan d'objet image de sorte que le plan image est pratiquement parallèle au plan d'objet image et verticalement déplacé par rapport à celui-ci, ou
b) une pluralité de dispositifs photoélectriques (481) disposés dans une rangée allongée ayant une dimension longitudinale, l'étape d'orientation incluant la mise en place de la rangée allongée de dispositifs photoélectriques (482) de sorte qu'une extension de la dimension longitudinale coupe le plan d'objet image (488) en formant un angle non-orthogonal.

12. Procédé de mise au point automatique pour un microscope (390) ayant un mécanisme de mise au point (446, 447, 418) et une pluralité de dispositifs d'imagerie (470, 482), chacun définissant un plan image respectif, le procédé comportant les étapes consistant à :
acquérir (437, 620) une pluralité de représentations d'image électroniques d'un objet image (420) sur un plan d'objet image, dans lequel chaque représentation d'image électronique représente une image de l'objet image au niveau d'un plan image respectif (Zᵢ) d'une pluralité de plans image définis par la pluralité de dispositifs d'imagerie (470, 482), chaque plan image étant déplacé dans une troisième dimension par rapport à chaque autre plan image, et la pluralité de dispositifs d'imagerie sont balayés à travers l'objet image (420),
former une image de volume en mémorisant (504, 443) des pluralités successives de représentations d'image électroniques,
appliquer des représentations d'image électroniques mémorisées à un filtre passe-haut (505) pour obtenir une pluralité de représentations d'image électroniques filtrées,
appliquer une fonction de mesure (506) à la pluralité de représentations d'image électroniques filtrées pour obtenir une pluralité de valeurs de netteté d'image (507),
combiner les valeurs de netteté d'image en associant les valeurs de netteté d'image à des positions de plan image,
sélectionner (508) une position de plan image associée dans l'étape de combinaison à une valeur de netteté d'image élevée, et
ajuster la mise au point (446, 447) du microscope sur la base de la position sélectionnée de plan image.
